Europäisches Patentamt

European Patent Office

Office européen des brevets

(11) Numéro de publication: **0 418 196 A1**

# DEMANDE DE BREVET EUROPEEN

(21) Numéro de dépôt: 90810662.8

(22) Date de dépôt: **31.08.90**

(51) Int. Cl.⁵: **D01F 1/10, A01G 13/02, D04H 1/42**

(30) Priorité: **04.09.89 FR 8911543**

(43) Date de publication de la demande: **20.03.91 Bulletin 91/12**

(84) Etats contractants désignés: **AT BE CH DE DK ES FR GB GR IT LI LU NL SE**

(71) Demandeur: HOLZSTOFF HOLDING S.A.
Malzgasse 15
CH-4052 Bâle(CH)

(72) Inventeur: Ehret, Philippe
3A, route de Colmar
F-68320 Fortschwihr(FR)

(74) Mandataire: Frossard, Michel, Dr. et al
A. Braun, Braun, Héritier, Eschmann AG,
Patentanwälte Holbeinstrasse 36-38
CH-4051 Basel(CH)

(54) **Fibres et tissus en polymères synthétiques, dépolymérisables ou dégradables par l'eau.**

(57) L'objet de l'invention consiste en fibres et/ou tissus, particulièrement en non-tissés, qui contiennent jusqu'à une proportion de 15 % en poids un ou des sels solubles dans l'eau. Ce ou ces sels, en outre, doivent avoir un point de fusion ou de décomposition nettement supérieur à celui des fibres ou tissus, ne pas altérer les propriétés mécanique du produit en l'absence d'eau et être neutres ou bénéfiques à l'égard des plantes et organismes du sol. Leur incorporation s'effectue au cours de la fabrication des fibres ou tissus.

Lorsque les produits entrent en contact avec l'eau, les sels se dissolvent et créent des cavités, ouvrant ainsi la voie à l'action des bactéries et autres microorganismes et/ou provoquant la dégradation en fragments plus petits et plus propres à la biodégradation. Devenus déchets après usage, ces produits se dégradent dans les décharges ou les sols en respectant l'environnement.

EP 0 418 196 A1

# FIBRES ET TISSUS EN POLYMÈRES SYNTHÉTIQUES, DÉPOLYMÉRISABLES OU DÉGRADABLES PAR L'EAU.

La présente invention a pour objet des fibres et/ou tissus en polymères synthétiques et particulièrement des tissus non-tissés, susceptibles d'être dépolymérisés ou dégradés par l'eau.

Comme chacun sait, le problème de la dégradabilité des polymères synthétiques, notamment des non-tissés, se fait de plus en plus crucial. Ainsi, rien qu'aux Etats-Unis, chaque année 150 millions de tonnes de déchets sont produits. Environ 80% de ces déchets sont mis dans des décharges publiques. La part des déchets provenant des hôpitaux se situe à 3,2 millions de tonnes par an. Les couches et changes pour bébé représentent environ 3,6 millions de tonnes par an. La part des non-tissés dans ce volume de déchets correspond à un 1/10ème.

Il existe, bien sûr, d'autres moyens que la décharge pour éliminer les non-tissés, mais aucune des solutions proposées ou mises en pratique, qu'il s'agisse de l'incinération, de la photodégradation ou de la photooxydation, n'est satisfaisante. Ainsi, pour la photodégradation, trois semaines d'exposition au soleil sont nécessaires pour un non-tissé à base de polypropylène. L'incinération, elle, implique un ramassage sélectif et, de plus, elle contribue au réchauffement général de l'atmosphère.

On a proposé déjà (US 3 840 512) d'accélérer la dégradation des polyoléfines sous l'effet de la lumière et essentiellement des radiations ultraviolettes, en y incorporant des mélanges d'un acide carboxylique et du sel correspondant d'un métal lourd de numéro atomique 22 à 29, par exemple, de stéarate ferrique et d'acide stéarique. Les compositions obtenues, façonnées en boîtes, bouteilles ou autres récipients, ont une durée de vie sensiblement réduite.

On connaissait aussi (EP 131 362) des compositions de polymère à base de lactides, glycolides ou dioxanones. De telles compositions, absorbables par les tissus humains, sont destinées à des applications chirurgicales, notamment sous forme d'agrafes, de prothèses, de joints pour anastomose. En mélangeant au polymère une charge de chlorure de sodium ou de potassium à raison de 10 à 60 % en poids, on peut améliorer une propriété de la composition, par exemple, sa rigidité, sa vitesse d'absorption ou des caractéristiques de mise en oeuvre telles que la température d'extrusion.

Des applications chirurgicales similaires peuvent être réalisées (EP 050 215) à partir de compositions consistant en acide polyglycolique et de 20 à 40 % en poids d'une charge de sulfate de baryum. Les articles ainsi formés supportent la cuisson dans l'eau, mais se décomposent in vivo (in situ) en fragments uniformes en un laps de temps de 8 à 15 jours, parce que le sulfate de baryum n'adhère pratiquement pas à l'acide polyglycolique et ainsi fragilise la masse.

Un intérêt particulier a été voué à la fabrication de paillis et pellicules de paillage à base de polyoléfines pour utilisation en agriculture, leur rôle étant de protéger des semis pendant qu'ils lèvent, des plantes transplantées etc. On s'est efforcé de résoudre le problème des déchets que ces produits deviennent après usage, en appliquant des principes différents.

Selon une proposition déjà ancienne (GB 1 253 449), un paillis tel que mentionné consiste en un film de polybutène-1 d'une épaisseur d'au moins 25 micromètres et qui contient un antioxydant et une substance absorbant les rayons ultraviolets. A défaut de ces additifs, le film serait décomposé en moins d'une saison, c'est-à-dire avant d'avoir rempli sa fonction; les additifs, par contre,retardent la décomposition du film. Avantageusement, le film contient en outre d'autres agents, de préférence, jusqu'à 40 % en poids d'un engrais.

Un autre paillis pour l'agriculture (DE 2 248 390) consiste en un film de polyoléfine comportant, comme additif, un échangeur de cations chargé d'ions de cuivre, fer, manganèse, zinc ou cobalt, destinés à enrichir le sol. L'échangeur de cations est un coke sulfoné ou qui a été oxydé à l'air humide; présent dans le film à raison de 0,1 à 40 % en poids, il a pour effet premier d'en accélérer la décomposition et pour effet secondaire d'absorber la chaleur solaire et ainsi de réchauffer le sol.

Un film de paillage photodégradable (FR 2 281 716) est obtenu en mélangeant à une partie en poids de polyoléfine de 0,5 à 4 parties de carbonate de calcium. Le film peut être retiré et brisé manuellement après une durée de service pouvant aller jusqu'à six mois; le film usagé peut alors être brûlé. La cendre restant, constituée de carbonate ou d'oxyde de calcium, peut servir à neutraliser le sol. D'autre part, sous l'effet des rayons ultraviolets, la polyoléfine se décompose en acides gras qui réagissent ou forment avec le carbonate de calcium un bloc, prévenant ainsi une acidification du sol.

On a décrit aussi (US 4 156 666) des compositions photodégradables de polymères ou copolymères d'éthylène ou de propylène, en mélange avec une charge minérale, notamment de carbonate de calcium, qui constitue de 10 à 60 % en poids de la composition, et un promoteur de dégradation à raison de 0,2 à 10 % en poids. Ce dernier consiste en esters d'un acide gras et d'un alcool aliphatique de $C_{10}$ à $C_{18}$, par

exemple en myristate de myristyle. Exposés à la lumière solaire, les articles fabriqués avec ces compositions, en particulier des paillis pour l'agriculture, se dégradent et se décomposent, sans qu'on ait à les éliminer spécialement.

Actuellement, l'incorporation de substances telles que l'amidon est faite dans des films de polymères synthétiques. Ainsi, la société Lawrence Starch Ltd. (Mississauga, Ontario/CA) vend un concentré d'amidon soluble qui, additionné aux résines de polyéthylène ou de polypropylène, permet de réaliser des films qui perdent 35% de leurs propriétés mécaniques après six mois d'abandon dans une décharge.

L'attaque de l'amidon par des bactéries ou des moisissures est prévisible. La dégradation s'obtient, dans ce cas, par coupure des chaînes des macromolécules sous l'influence des germes (bactéries ou moisissures) utilisant ces substances comme substrat de culture. Le polypropylène lui-même, par contre, ne peut être utilisé par les bactéries que lorsqu'il se présente sous forme de chaînes de macromolécules très courtes. D'autre part, aucune moisissure, apparemment, ne peut se développer sur ce polymère.

Pour que les produits ainsi obtenus soient dégradés, il faut la présence indispensable de ces germes. Mais, d'une part, il ne sont pas obligatoirement présents et il ne faut pas perdre de vue, d'autre part, que les produits finis réalisés sont sensibles aussi soit aux germes aérobies (capables de se développer en milieu oxygène), soit aux germes anaérobies (incapables de se développer en milieu oxygène). Or, il est difficile de prévoir les conditions d'emmagasinage et/ou le sort réservé aux produits après usage (seront-ils enfouis ou non, en quels lieux et dans quelles conditions etc.).

D'autres voies pour accélérer la dégradation des polymères ont été proposées, telles que l'incorporation de sucres ou d'acides gras, mais sans qu'elles se soient avérées assez satisfaisantes pour s'imposer.

Or, on a trouvé qu'il est possible de réduire en poudre les fibres ou tissus en polymères synthétiques, notamment les tissus ou voiles de non-tissés, et de promouvoir ainsi leur biodégradation par des bactéries et d'autres microorganismes (Alcaligenes, Aspergillus, Bacillus, Escherichia, Pseudomonas etc.) en incorporant auxdites fibres ou auxdits tissus un ou des sels remplissant certaines conditions, dont la première est une solubilité élevée dans l'eau. L'incorporation du ou des sels se fait lors de la fabrication du non-tissé ou des fibres.

Toutefois, considérant les étapes d'extrusion et de filage nécessaires pour fabriquer les fibres, on ne pouvait s'attendre à ce que les propriétés mécaniques, après incorporation d'un sel, soient satisfaisantes. En effet, la présence de particules étrangères et hautement solubles dans l'eau au sein d'une masse de polymère hydrophobe, telle que le sont notamment les polyoléfines, devrait créer des points de rupture au cours du filage. Or, il s'est avéré, bien au contraire, que les propriétés mécaniques des fibres obtenues non seulement sont satisfaisantes, c'est-à-dire permettent l'utilisation industrielle des fibres, mais même sont égales ou comparables à celles de fibres correspondantes exemptes de sel, ainsi qu'il ressort en particulier du Tableau comparatif donné après les Exemples.

En outre, le ou les sels sont utilisés sous forme pulvérulente, c'est-à-dire sous forme de fines particules. La dimension moyenne ou granulométrie des particules est, de préférence, inférieure à 5 micromètres ($\mu$m), tandis que le diamètre moyen des fibres est en général d'environ 20 micromètrès. Par leur diamètre - jusqu'à 5 $\mu$m - les particules de sel peuvent donc diminuer presque de 25% le diamètre utile ou effectif des fibres mises en jeu et ainsi les fragiliser dans la même mesure. La haute qualité des propriétés mécaniques des fibres, relevée ci-dessus, en apparaît d'autant plus remarquable et surprenante.

En raison de leur caractère hydrosoluble, le ou les sels se dissolvent plus ou moins rapidement lorsque les fibres ou tissus entrent en contact avec l'eau, leur élimination par dissolution crée de minuscules cavités et ouvre ainsi la voie à la biodégradation par des bactéries et autres micro-organismes et/ou provoque une scission en fragments toujours plus petits et par là, plus accessibles à la biodégradation. De cette façon, les fibres ou voiles de non-tissés, par exemple, sont réduits progressivement et finalement en une sorte de poudre. On obtient ainsi une meilleure dégradation des produits mis dans les décharges publiques et par là un meilleur respect de l'environnement. En agriculture, le sel ou les sels peuvent être choisis spécialement pour leurs activités favorables à la croissance des plantes.

Les fibres ou tissus faits de polymères synthétiques auxquels il y a lieu d'incorporer le ou lesdits sels consistent, notamment, en polyoléfines, par exemple polyéthylène, polypropylène, polyisobutène, en polyamides, par exemple polyamide 4, polyamide 6, polyamide 6,6, en polyesters, par exemple téréphthalat de polyéthylène glycol, en polycarbonates, en polyuréthanes, en polyurées, en polyacrylnitriles, en chlorure de polyvinyle et de polyvinylidène, en alcool polyvinylique, en polytétrafluoréthylène. Il s'agit là des groupes les plus importants.

Pour plus de détails à ce sujet, on se reportera par exemple à Ullmanns Encyklopädie der technischen Chemie, 4e édition (Verlag Chemie GmbH, Weinheim RFA), volume 11 (1976), pages 193-204 et 291-358 ainsi que volume 19 (1980). La fabrication des tissus non-tissés est traitée dans le volume 23 (1983) du même ouvrage, pages 729-745.

EP 0 418 196 A1

Le choix du sel est évidemment d'une importance capitale; il doit:
- être hautement soluble dans l'eau,
- posséder un point de fusion ou de décomposition élevé et en tout cas nettement supérieur à celui des fibres ou des tissus auxquels il doit être incorporé, pour ne pas se décomposer lors de l'incorporation dans les polymères lors du filage ou de l'extrusion,
- ne pas modifier les propriétés mécaniques du produit, c'est-à-dire avoir un comportement neutre à cet égard, en l'absence d'eau,
- être au moins neutre, voire même assimilable ou bénéfique à la croissance des plantes ou autres organismes vivant dans le sol.

On peut utiliser avec avantage, de préférence, des sels minéraux ou organiques dont le cation est, notamment, le sodium, le potassium, l'ammonium, le calcium, le magnésium, le fer, le manganèse ou le zinc. De son côté, l'anion du sel mis en jeu peut être, de préférence, un chlorure, un carbonate, un sulfate, un nitrate, un phosphate ou un iodate.

Des exemples de sels répondant à ces conditions sont le chlorure, le carbonate, le nitrate, le sulfate et le formiate de sodium, le chlorure, le nitrate, le sulfate et le sorbate de potassium et l'hydrogénophosphate dipotassique, le chlorure, le bromure, l'hexafluorophosphate et le dihydrogénophosphate d'ammonium, l'acétylsalicylate de calcium, l'acétylsalicylate de magnésium.

Pour réaliser les fibres et/ou tissus selon l'invention, on leur incorpore, au cours de la fabrication, un ou des sels tels que défini ci-dessus en mélangeant ceux-ci et en les fixant, soit sous forme solide, soit sous forme d'une solution aqueuse concentrée avec dans ce cas une étape subséquente de séchage, soit sous forme d'une suspension dans une huile minérale, aux granulés de polymères synthétiques qui constituent les produits de départ desdites fibres ou desdits tissus, puis en soumettant le mélange ainsi obtenu aux procédures habituelles de filage ou d'extrusion.

Avantageusement, le ou les sels seront incorporés à la masse de polymère à raison de 0,1 à 15 % en poids, de préférence de 2 à 10%, par rapport au poids des fibres ou des tissus. Une proportion de sel supérieure à environ 15 % en poids provoque habituellement une baisse des propriétés mécaniques.

La durée effective d'utilisation des fibres ou voiles de non-tissés en présence d'eau dépend essentiellement de la nature du polymère et du sel mis en jeu et de la concentration du sel dans la masse. Cette durée est, de préférence, de un à trois mois et peut être fixée par l'homme du métier au moyen de quelques essais simples; on se reportera à ce sujet, notamment, aux exemples suivants.

Comme l'eau se trouve pratiquement partout dans la nature, la dégradation et biodégradation des fibres ou tissus selon l'invention s'effectue sans intervention de l'homme, lorsqu'ils sont exposés aux aléas climatiques et en particulier au cours de leur abandon sur les décharges publiques. Les avantages qui en découlent sont, soit une dégradation contrôlée, principalement en agriculture avec même, selon les sels, un effet favorable à la croissance des plantes ou des microorganismes du sol, soit une dégradation accélérée qui permet de mieux respecter l'environnement.

De manière plus générale, les avantages de ces fibres ou non-tissés hydrodégradables sont, d'une part, le respect de l'environnement grâce à la décomposition possible en tout milieu (hors du sol, dans la terre, etc.), dès que l'eau est présente, et d'autre part, le fait que la présence de bactéries ou moisissures spécifiques n'est pas nécessaire, la biodégradation pouvant donc se faire en tous lieux et en tout temps. Enfin, en peut envisager l'incorporation de sels jouant même un rôle bénéfique pour la croissance des plantes.

Pour juger des propriétés mécaniques des fibres et tissus de non-tissé selon la présente invention, on a mesuré
- la résistance à la traction et l'allongement des non-tissés selon la norme française NF G 07-001 (DIN 53857, EDANA 20.02.89),
- la charge de rupture et l'allongement à la rupture des fibres selon la norme française NF G 07-008 (éditeur: AFNOR, Paris 2e).

Exemples 1 et 2: Incorporation de NaCl dans un non-tissé spun 100 % polypropylène

Le chlorure de sodium fond à 804° C et est soluble dans 2,8 parties d'eau de 15 à 25° C.

Une solution à 20 % de NaCl a donc été faite, puis mise en contact avec les granulés de polymère PP (polypropylène) Vestolen (Roussel Hoechst, 92080 Paris la Défense). Après mélange dans un malaxeur rotatif, un séchage au four a permis de fixer de façon homogène le chlorue de sodium. Ce mélange est alors incorporé à raison de 1 % dans des granulés de PP Vestolen, puis le tout est filé par le procédé spun.

Une addition d'agent anti-ultraviolet a été réalisée dans un deuxième mélange.

4

La concentration de chlorure de sodium dans le produit fini, un non-tissé de 17 g/m$^2$, est légèrement inférieure à celle théoriquement obtenue (0,2 %). Toutefois, elle est suffisante pour constater par rapport à un témoin que:
- les propriétés mécaniques initiales sont inchangées;
- après 15 jours de contact avec de l'eau, une baisse des caractéristiques mécaniques pouvant aller jusqu'à 50% environ est observée; le présence de sel soluble facilite donc la dégradation du non-tissé obtenu;
- il n'y a pas d'interférence avec l'agent ultraviolet utilisé.

| Exemple 1 | Non-tissé avec sel (NaCl 0,2 %) sans agent anti U.V. | | Non-tissé avec sel (NaCl 0,2 %) et agent anti U.V. | |
|---|---|---|---|---|
| | après 48H. | après 15 jours | après 48H. | après 15 jours |
| Résistance à la rupture N/ 5 cm | | | | |
| sens marche sens travers | 18,7 15,5 | 16,7 10,1 | 19,5 12,3 | 18,5 7,3 |
| Allongment à la rupture en % | | | | |
| sens marche sens travers | 34,4 58,7 | 16,0 30,4 | 39,4 46,8 | 21,2 20,7 |

Un essai avec une concentration deux fois supérieure de chlorure de sodium a aussi été réalisé, avec les mêmes constations sur le produit fini.

| Exemple 2 | Non-tissé avec sel (NaCl 0,4 %) sans agent anti U.V. | | Non-tissé avec sel (NaCl 0,4 %) et agent anti U.V. | |
|---|---|---|---|---|
| | après 48H. | après 15 jours | après 48H. | après 15 jours |
| Résistance à la rupture N/ 5 cm | | | | |
| sens marche sens travers | 25,8 14,1 | 22,6 12,6 | 20,0 11,8 | 19,7 9,8 |
| Allongment à la rupture en % | | | | |
| sens marche sens travers | 41,3 54,0 | 19,0 26,0 | 36,2 53,5 | 23,5 32,2 |

Exemple 3: Incorporation de Na$_2$CO$_3$ dans un non-tissé spun 100 % polypropylène

Le carbonate neutre de sodium est broyé, puis criblé, pour l'obtention d'une granulométrie permettant une extrusion. Puis, il est fixé sur les granulés de PP Vestolen (Roussel Hoechst, 92080 Paris la Défense) à l'aide d'une huile de silicone Rhodorsil 47 V 500 (Rhône Poulenc, F-92408 Courbevoie), le carbonate étant facilement dispersé dans cette huile. Un essai avec une concentration de 0,12 % de Na$_2$CO$_3$ a été réalisé en mélangeant les granulés ainsi préparés avec des granulés non-traités. Le mélange obtenu a été filé selon le procédé spun.

Après vieillissement en contact avec de l'eau, on a fait au sujet des propriétés mécaniques les mêmes constatations qu'aux exemples 1 et 2.

| | Non-tissé avec sel (Na₂CO₃ 0,12 %) sans agent anti U.V. | | Non-tissé avec sel (Na₂CO₃ 0,12 %) et agent anti U.V. | |
|---|---|---|---|---|
| | après 48H. | après 15 jours | après 48H. | après 15 jours |
| Résistance à la rupture N/ 5 cm | | | | |
| sens marche<br>sens travers | 19,0<br>10,8 | 18,1<br>9,6 | 19,6<br>15,0 | 18,0<br>13,8 |
| Allongment à la rupture en % | | | | |
| sens marche<br>sens travers | 32,5<br>49,0 | 26,2<br>25,7 | 33,7<br>56,6 | 30,0<br>32,5 |

Exemples 4 et 5: Incorporation de NaCl dans un non-tissé spun 100 % polypropylène

Le NaCl est broyé de manière à obtenir une granulométrie très fine (taille moyenne des cristaux : 4-5 micromètrès), puis il est fixé sur des granulés de polypropylène Aggryl grade 25 (Aggryl, F-92807 Puteaux Cedex) à l'aide d'une huile de silicone Rhodorsil 47 V 500 (Rhône Poulenc, F-92408 Courbevoie). Plusieurs concentrations ont été réalisées pour des valeurs théoriques de 2 et 5 %.

La quantité de sel à ajouter est calculée en fonction de la masse de polymère, puis la concentration est calculée en fonction de la masse totale du mélange.

Calcul de la concentration du mélange à 2 % :

quantité de polymère : 25 kg

quantité de sel : 2/100 x 25 = 0,5 kg

quantité d'huile de silicone : 1/100 x 25 = 0,25 kg

d'où la quantité totale du mélange : 25 + 0,5 + 0,25 = 25,75 kg

La concentration réelle est donc:

$$100 \times \frac{0,5}{25,75} = 1,94 \ \%$$

De même pour le mélange à 5 % :

quantité de polymère : 25 kg

quantité de sel : 5/100 x 25 = 1,25 kg

quantité d'huile de silicone : 1/100 x 25 = 0,25 kg

d'où la quantité totale du mélange : 25 + 1,25 + 0,25 = 26,50 kg

La concentration réelle est donc :

$$100 \times \frac{1,25}{26,5} = 4,71 \ \%$$

L'incorporation du sel est effectuée comme décrit à l'exemple 3, puis le produit est filé par le procédé spun et le non-tissé obtenu est placé en milieu aqueux. Un examen suivi de la dégradation des nappes de non-tissé au contact de l'eau a donné les résultats suivants:

|  | Exemple 4 Non-tissé avec 2 % de NaCl | | Exemple 5 Non-tissé avec 5 % de NaCl | |
|---|---|---|---|---|
|  | T = 0 jour | T = 26 jours | T = 0 jour | T = 26 jours |
| Résistance à la rupture N/ 5 cm |  |  |  |  |
| - sens marche<br>- sens travers | 15,40<br>25,3 | 17,30<br>23,9 | RESULTATS ENCORE | |
| Allongment à la rupture en % |  |  | NON | |
| - sens marche<br>- sens travers | 29,2<br>30,4 | 21,6<br>21,8 | OBTENUS | |

Exemples 6 et 7: Incorporation de $Na_2CO_3$ dans un non-tissé spun 100 % polypropylène

Les nappes de non-tissé se préparent de la même façon qu'à l'exemple 3. Les concentrations visées sont de 2 et 5 % (valeurs théoriques). La taille moyenne des cristaux de sel est d'environ 4 micromètres. Un examen suivi de la dégradation des nappes de non-tissé au contact de l'eau a donné les résultats suivants:

|  | Exemple 6 Non-tissé avec 2 % de $Na_2CO_3$ | | Exemple 7 Non-tissé avec 5 % de $Na_2CO_3$ | |
|---|---|---|---|---|
|  | T = 0 jour | T = 26 jours | T = 0 jour | T = 26 jours |
| Résistance à la rupture N/ 5 cm |  |  |  |  |
| - sens marche<br>- sens travers | 10,31<br>9,26 | 8,81<br>6,43 | 55,01<br>30,39 | 29,43<br>25,61 |
| Allongment à la rupture en % |  |  |  |  |
| - sens marche<br>- sens travers | 19,95<br>29,51 | 14,97<br>26,60 | 35,21<br>33,70 | 25,20<br>35,34 |

Exemples 8 et 9: Incorporation de $K_2SO_4$ dans un non-tissé 100 % polypropylène

Les mélanges se préparent de la même façon qu'à l'exemple 3. La taille moyenne des cristaux de sel est inférieure à 1 micromètre. Les concentrations visées sont de 2 et 5 % (valeurs théoriques). Un examen suivi de la dégradation des nappes de non-tissé au contact de l'eau a donné les résultats suivants:

| | Exemple 8 Non-tissé avec 2 % de $K_2SO_4$ | | Exemple 9 Non-tissé avec 5 % $K_2SO_4$ | |
|---|---|---|---|---|
| | T = 0 jour | T = 26 jours | T = 0 jour | T = 22 jours |
| Résistance à la rupture N/ 5 cm | | | | |
| - sens marche<br>- sens travers | 12,99<br>11,80 | 12,01<br>5,65 | 66,35<br>16,36 | 58,19<br>13,69 |
| Allongment à la rupture en % | | | | |
| - sens marche<br>- sens travers | 22,06<br>36,05 | 16,74<br>16,36 | 62,32<br>84,19 | 54,28<br>73,14 |

Les propriétés mécaniques des produits des Exemples 5, 7 et 9 ont été comparées à celles d'un témoin préparé de façon identique, mais sans incorporation d'un sel. Il ressort du Tableau comparatif suivant que ces propriétés sont sensiblement équivalentes.

| Tableau comparatif des résistances et allongements | | | | |
|---|---|---|---|---|
| Echantillon | Témoin | NaCl 5%<br>(4-5 $\mu$m) | $Na_2CO_3$ 5%<br>(4 $\mu$m) | $K_2SO_4$ 5%<br>(<1 $\mu$m) |
| Charge à la rupture en g/dtex | 2,25 | 2,18 | 2,78 | 2,03 |
| Allongement en % | 145 | 213 | 193 | 258 |
| Titre en dtex | 2,59 | 2,50 | 2,33 | 2,48 |

## Revendications

1. Fibres et/ou tissus en polymères synthéthiques filables ou extrudables, susceptibles d'être dépolymérisés ou dégradés par l'eau, caractérisés en ce qu'ils contiennent, à raison de 0,1 à 15 % en poids par rapport au poids des fibres ou du tissu et sous forme pulvérulente, un ou des sels qui se distinguent par:
- une solubilité élevée dans l'eau,
- un point de fusion ou de décomposition nettement supérieur à celui desdites fibres ou desdits tissus,
- un comportement neutre, en l'absence d'eau, vis-à-vis des propriétés mécaniques desdites fibres ou desdits tissus, et
- un comportement au moins neutre, sinon bénéfique, vis-à-vis de la croissance des plantes ou autres organismes vivant dans le sol.

2. Fibres et/ou tissus selon la revendication 1, caractérisés en ce que lesdits tissus sont constitués de non-tissés.

3. Fibres et/ou tissus selon la revendication 1, caractérisés en ce que les polymères synthéthiques sont constitués de polyoléfines, notamment de polyéthylène ou de polypropylène, de polyamides ou de polyesters.

4. Fibres et/ou tissus selon la revendication 1, caractérisés en ce que les sels ont une granulométrie moyenne inférieure à 5 micromètres.

5. Fibres et/ou tissus selon la revendication 1, caractérisés en ce que les sels sont des sels minéraux ou organiques dont le cation est le sodium, le potassium, l'ammonium, le calcium, le magnésium, le fer, le manganèse ou le zinc.

6. Fibres et/ou tissus selon la revendication 1, caractérisés en ce que les sels sont des sels minéraux ou organiques dont l'anion est un chlorure, un carbonate, un sulfate, un nitrate, un phosphate, un iodate.

7. Fibres et/ou tissus selon la revendication 1, caractérisés en ce que le ou les sels y sont présents à raison de 2 à 10 % en poids par rapport au poids des fibres ou du tissu.

8. Procédé de fabrication de fibres et/ou tissus selon la revendication 1, caractérisé en ce que l'on incorpore auxdites fibres ou auxdits tissus, au cours de leur fabrication, un ou des sels tels que définis à la revendication 1, sous forme pulvérulente et à raison de 0,1 à 15 % en poids par rapport au poids des fibres ou du tissu, en les mélangeant et en les fixant, soit sous forme solide, soit sous forme d'une solution aqueuse concentrée avec dans ce cas une étape subséquente de séchage, soit sous forme d'une suspension dans une huile minérale, aux granulés de polymères synthétiques qui constituent les produits de départ desdites fibres ou desdits tissus, puis en soumettant le mélange obtenu aux procédures habituelles de filage et/ou d'extrusion.

9. Procédé selon la revendication 8, caractérisé en ce que l'on incorpore le ou les sels à raison de 2 à 10 % en poids par rapport au poids desdites fibres ou desdits tissus.

10. Procédé selon la revendication 8, caractérisé en ce que l'on incorpore un ou des sels d'une granulométrie moyenne inférieure à 5 micromètres.

**Office européen
des brevets**

# RAPPORT DE RECHERCHE
# EUROPEENNE

Numéro de la demande

# EP 90 81 0662

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | GB-A-1 253 449   (PRINCETON CHEMICAL RESEARCH)<br>* Page 2, lignes 30-34 *<br>― ― ― | 1 | D 01 F 1/10<br>A 01 G 13/02<br>D 04 H 1/42 |
| D,A | EP-A-0 131 362   (ETHICON)<br>* Page 6, lignes 6-14 *<br>― ― ― | 1 | |
| D,A | US-A-3 840 512   (D.S. BRACKMAN)<br>― ― ― ― ― | | |

| DOMAINES TECHNIQUES RECHERCHES (Int. Cl.5) |
|---|
| D 01 F<br>C 08 K<br>C 08 J<br>A 01 G |

Le présent rapport de recherche a été établi pour toutes les revendications

| Lieu de la recherche | Date d'achèvement de la recherche | Examinateur |
|---|---|---|
| La Haye | 13 décembre 90 | VAN GOETHEM G.A.J.M. |

CATEGORIE DES DOCUMENTS CITES
X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons
.....................................................................
& : membre de la même famille, document correspondant